(19) Europäisches Patentamt

European Patent Office

Office européen des brevets

(11) **EP 4 691 698 A1**

(12) **EUROPEAN PATENT APPLICATION**
published in accordance with Art. 153(4) EPC

(43) Date of publication:
**11.02.2026 Bulletin 2026/07**

(21) Application number: **23930737.4**

(22) Date of filing: **31.08.2023**

(51) International Patent Classification (IPC):
**B25J 5/00** *(2006.01)*          **B25J 13/00** *(2006.01)*
**G05D 1/20** *(2024.01)*

(52) Cooperative Patent Classification (CPC):
**B25J 5/00; B25J 13/00**

(86) International application number:
**PCT/JP2023/031774**

(87) International publication number:
**WO 2024/202105 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2023 JP 2023054882**

(71) Applicant: **Sony Group Corporation
Tokyo 108-0075 (JP)**

(72) Inventor: **TAKASUGI, Noriaki
Tokyo 108-0075 (JP)**

(74) Representative: **D Young & Co LLP
3 Noble Street
London EC2V 7BQ (GB)**

(54) **INFORMATION PROCESSING DEVICE, OPERATION CONTROL METHOD, AND MOVING BODY**

(57)    The present technology relates to an information processing apparatus, a motion control method, and a moving body that enable smooth switching between a normal motion and a safe motion for ensuring safety of a moving body.

An information processing apparatus includes a motion control unit that causes a motion of a moving body to transition stepwise from one motion of a normal motion and a safe motion for ensuring safety of the moving body to another motion. The present technology is applicable to, for example, a legged robot.

*FIG. 2*

EP 4 691 698 A1

## Description

TECHNICAL FIELD

The present technology relates to an information processing apparatus, a motion control method, and a moving body, and more particularly, to an information processing apparatus, a motion control method, and a moving body capable of smoothly switching between a normal motion and a safe motion for ensuring safety of a moving body.

BACKGROUND ART

In recent years, there is an increasing demand for legged robots capable of autonomously moving in various environments. On the other hand, since the legged robot moves while touching a surrounding environment, a motion tends to be unstable. Accordingly, it is important for the legged robot to switch the motion in accordance with a situation, such as performing an emergency stop to ensure safety at the time of abnormality.

In contrast, in related art, there has been proposed a technique of determining a relationship between joint information and posture information of the legged robot and controlling movement of a leg on the basis of a collective posture estimated on the basis of the relationship between the joint information and posture information (see, for example, Patent Document 1).

CITATION LIST

PATENT DOCUMENT

Patent Document 1: Japanese Patent Application Laid-Open No. 2021-181156

SUMMARY OF THE INVENTION

PROBLEMS TO BE SOLVED BY THE INVENTION

However, in the technique described in Patent Document 1, since a control policy is determined after determination from sensor information, there is a possibility that a discontinuous motion occurs by modifying the control policy after the determination or chattering occurs in the vicinity of a boundary of a determination condition. For example, there is a possibility that the discontinuous motion or chattering occurs at the time of switching between a normal motion and a safe motion for ensuring safety.

The present technology has been made in view of such a situation, and enables smooth switching between a normal motion and a safe motion for ensuring safety of a moving body such as a legged robot.

SOLUTIONS TO PROBLEMS

An information processing apparatus according to a first aspect of the present technology includes a motion control unit that causes a motion of a moving body to transition stepwise from one motion of a normal motion and a safe motion for ensuring safety of the moving body to another motion.

A motion control method according to a first aspect of the present technology causes a motion of a moving body to transition stepwise from one motion of a normal motion and a safe motion for ensuring safety of the moving body to another motion.

A moving body according to a second aspect of the present technology includes a drive unit used for a normal motion and a safe motion for ensuring safety, and a motion control unit that causes a motion of the moving body to transition stepwise from one motion of the normal motion and the safe motion to another motion.

In the first aspect or the second aspect of the present technology, the motion of the moving body transitions stepwise from one motion of the normal motion and the safe motion for ensuring the safety of the moving body to the another motion.

BRIEF DESCRIPTION OF DRAWINGS

Fig. 1 is a perspective view of a moving body to which the present technology is applied.
Fig. 2 is a block diagram illustrating a configuration example of a portion related to movement of the moving body to which the present technology is applied.

Fig. 3 is a block diagram illustrating a configuration example of functions of a motion control unit of the moving body.

Fig. 4 is a block diagram illustrating a characteristic example of a position gain.

Fig. 5 is a diagram illustrating an example of a safe region.

Fig. 6 is a schematic diagram illustrating an example of a movable range and the like of a distal end of a leg of the moving body.

Fig. 7 is a diagram illustrating a boundary line expressing a spike-shaped obstacle.

Fig. 8 is a diagram for explaining an example of a determination function for a rectangular parallelepiped table.

Fig. 9 is a diagram for explaining an example of a collision determination function between OBBs.

Fig. 10 is a block diagram illustrating a modification of the motion control unit.

Fig. 11 is a graph representing characteristics of a motion transition time.

Fig. 12 is a block diagram illustrating a modification and the like of the motion control unit.

Fig. 13 is a block diagram illustrating a configuration example of a computer.

MODE FOR CARRYING OUT THE INVENTION

Hereinafter, modes for carrying out the present technology will be described. The description will be given in the following order.

1. Embodiment
2. Modifications
3. Others

<<1. Embodiment>>

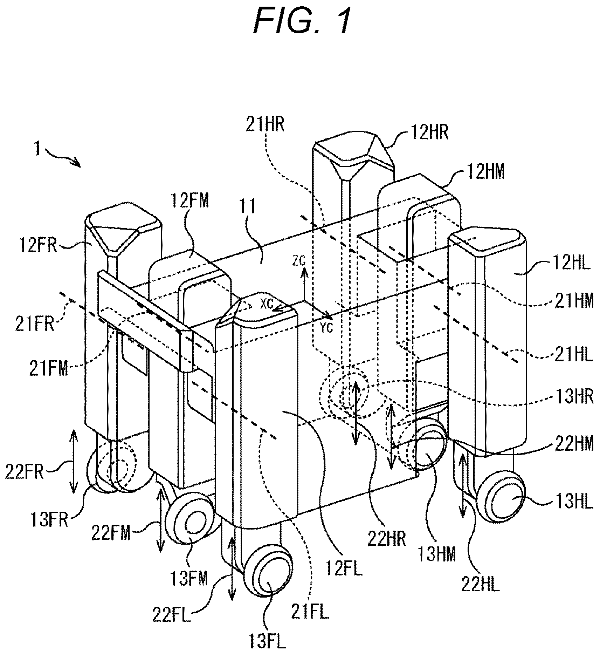

An embodiment of the present technology will be described with reference to Figs. 1 to 8.

<Configuration Example of Moving Body 1>

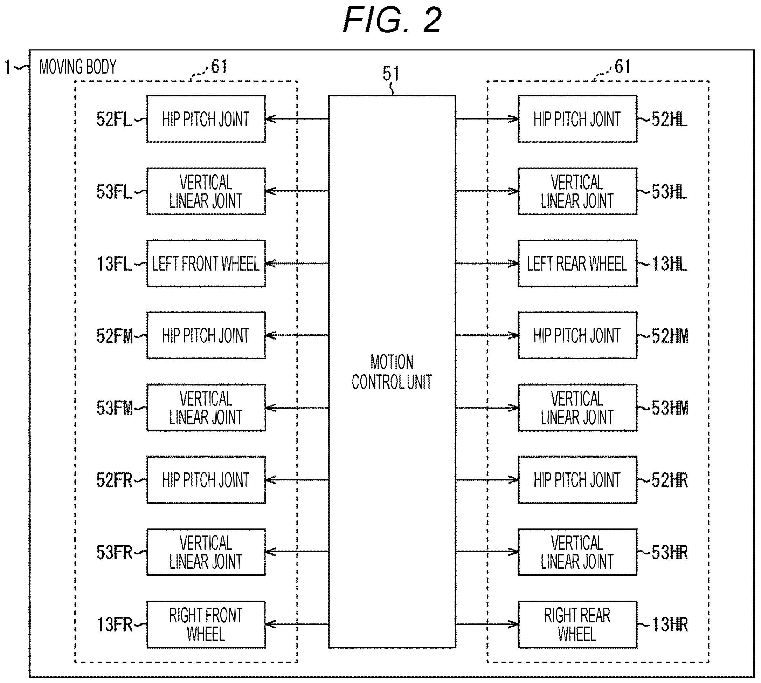

First, a configuration example of an embodiment of a moving body 1 to which the present technology is applied will be described with reference to Figs. 1 and 2.

Fig. 1 is a perspective view illustrating a configuration example of an external appearance of the moving body 1 to which the present technology is applied.

The moving body 1 is a legged robot that can move autonomously.

The moving body 1 includes a trunk 11, and a left front leg 12FL, a middle front leg 12FM, a right front leg 12FR, a left rear leg 12HL, a middle rear leg 12HM, and a right rear leg 12HR.

The trunk 11 has a shape close to a rectangular parallelepiped. In front of the trunk 11, three front legs, that is, the left front leg 12FL, the middle front leg 12FM, and the right front leg 12FR are disposed side by side. Behind the trunk 11, three front legs, that is, the left rear leg 12HL, the middle rear leg 12HM, and the right rear leg 12HR are disposed side by side.

The left front leg 12FL is disposed on a left front side of the trunk 11. Specifically, the left front leg 12FL is connected to the vicinity of a front end of a left side surface of the trunk 11 via a hip pitch joint 52FL (Fig. 2) so as to be rotatable in a pitch direction (up-down direction) about an axis 21FL extending to the left and right. The left front leg 12FL includes a vertical linear motion joint 53FL (Fig. 2), and can expand and contract as indicated by an arrow 22FL. A left front wheel 13FL is provided at a distal end of the left front leg 12FL. The left front wheel 13FL includes an actuator such as a motor, and is a drive wheel that is driven by a motion control unit 51 (Fig. 2) to rotate in a front-rear direction.

The middle front leg 12FM is disposed in front of and at a center of the trunk 11. Specifically, the middle front leg 12FM is connected to the vicinity of a center of a front surface of the trunk 11 via a hip pitch joint 52FM (Fig. 2) so as to be rotatable in a pitch direction about an axis 21FM extending to the left and right. The middle front leg 12FM includes a vertical linear motion joint 53FM (Fig. 2) and can expand and contract as indicated by an arrow 22FM. A middle front wheel 13FM is provided at a distal end of the middle front leg 12FM. The middle front wheel 13FM is a passive wheel (non-drive wheel) that passively rotates by applying a force from an outside, and is an omnidirectional wheel that can move in all directions. For example, the middle front wheel 13FM is an omni wheel, a wheel with a caster, or a ball caster that passively rotates. Note that, the wheel with a caster may be a type in which a caster portion is rotationally driven by a motor.

The right front leg 12FR is disposed on a right front side of the trunk 11. Specifically, the right front leg 12FR is connected to the vicinity of a front end of a right side surface of the trunk 11 via a hip pitch joint 52FR (Fig. 2) so as to be rotatable in a pitch direction about an axis 21FR extending to the left and right. The right front leg 12FR includes a vertical linear motion joint 53FR (Fig. 2) and can expand and contract as indicated by an arrow 22FR. A right front wheel 13FR is provided at a distal end of the right front leg 12FR. The right front wheel 13FR includes an actuator such as a motor, and is a drive wheel that is driven by the motion control unit 51 (Fig. 2) and rotates in a front-rear direction.

The left rear leg 12HL is disposed on a left rear side of the trunk 11. Specifically, the left rear leg 12HL is connected to the vicinity of a rear end of a left side surface of the trunk 11 via a hip pitch joint 52HL (Fig. 2) so as to be rotatable in a pitch direction about an axis 21HL extending to the left and right. The left rear leg 12HL includes a vertical linear motion joint 53HL (Fig. 2) and can expand and contract as indicated by an arrow 22HL. A left rear wheel 13HL is provided at a distal end of the left rear leg 12HL. The left rear wheel 13HL includes an actuator such as a motor, and is a drive wheel that is driven by the motion control unit 51 (Fig. 2) and rotates in a front-rear direction.

The middle rear leg 12HM is disposed behind and at a center of the trunk 11. Specifically, the middle rear leg 12HM is connected to the vicinity of a center of a rear surface of the trunk 11 via a hip pitch joint 52HM (Fig. 2) so as to be rotatable in a pitch direction about axis 21HM extending to the left and right. The middle rear leg 12HM includes a vertical linear motion joint 53HM (Fig. 2) and can expand and contract as indicated by an arrow 22HM. A middle rear wheel 13HM is provided at a distal end of the middle rear leg 12HM. The middle rear wheel 13HM is a passive wheel (non-drive wheel) that passively rotates by applying a force from an outside, and is an omnidirectional wheel that can move in all directions. For example, the middle rear wheel 13HM is an omni wheel, a wheel with a caster, or a ball caster that passively rotates. Note that, the wheel with a caster may be a type in which a caster portion is rotationally driven by a motor.

The right rear leg 12HR is disposed on a right rear side of the trunk 11. Specifically, the right rear leg 12HR is connected to the vicinity of a rear end of a right side surface of the trunk 11 via a hip pitch joint 52HR (Fig. 2) so as to be rotatable in a pitch direction about an axis 21HR extending to the left and right. The right rear leg 12HR includes a vertical linear motion joint 53HR (Fig. 2) and can expand and contract as indicated by an arrow 22HR. A right rear wheel 13HR is provided at a distal end of the right rear leg 12HR. The right rear wheel 13HR includes an actuator such as a motor, and is a drive wheel that is driven by the motion control unit 51 (Fig. 2) and rotates in a front-rear direction.

Note that, hereinafter, in a case where it is not necessary to individually distinguish the left front leg 12FL, the middle front leg 12FM, the right front leg 12FR, the left rear leg 12HL, the middle rear leg 12HM, and the right rear leg 12HR, these legs are simply referred to as legs 12. Hereinafter, in a case where it is not necessary to individually distinguish the left front leg 12FL, the middle front leg 12FM, and the right front leg 12FR, these legs are simply referred to as front legs 12F. Hereinafter, in a case where it is not necessary to individually distinguish the left rear leg 12HL, the middle rear leg 12HM, and the right rear leg 12HR, these legs are simply referred to as rear legs 12H.

Hereinafter, in a case where it is not necessary to individually distinguish the left front wheel 13FL, the middle front wheel 13FM, the right front wheel 13FR, the left rear wheel 13HL, the middle rear wheel 13HM, and the right rear wheel 13HR, these wheels are simply referred to as wheels 13. Hereinafter, in a case where it is not necessary to individually distinguish the left front wheel 13FL, the middle front wheel 13FM, and the right front wheel 13FR, these wheels are simply referred to as front wheels 13F. Hereinafter, in a case where it is not necessary to individually distinguish the left rear wheel 13HL, the middle rear wheel 13HM, and the right rear wheel 13HR, these wheels are simply referred to as rear wheels 13H.

Fig. 2 illustrates a configuration example of a portion related to movement of the moving body 1. In addition to the configuration described above with reference to Fig. 1, the moving body 1 includes the motion control unit 51, the hip pitch joint 52FL, the hip pitch joint 52FM, the hip pitch joint 52FR, the hip pitch joint 52HL, the hip pitch joint 52HM, the hip pitch joint 52HR, the vertical linear motion joint 53FL, the vertical linear motion joint 53FM, the vertical linear motion joint 53FR, the vertical linear motion joint 53HL, the vertical linear motion joint 53HM, and the vertical linear motion joint 53HR.

Note that, hereinafter, in a case where it is not necessary to individually distinguish the hip pitch joint 52FL to the hip pitch joint 52HR, these joints are simply referred to as hip pitch joints 52. Hereinafter, in a case where it is not necessary to individually distinguish the vertical linear motion joint 53FL to the vertical linear motion joint 53HR, these joints are simply referred to as vertical linear motion joints 53.

The motion control unit 51 is realized, for example, by a processor such as a CPU executing a control program. The motion control unit 51 controls various motions of the moving body 1. For example, the motion control unit 51 controls the movement of the moving body 1 by controlling the movement of each leg 12 and each wheel 13.

Specifically, the motion control unit 51 individually controls a rotation direction and a rotation speed of each of the left front wheel 13FL, the right front wheel 13FR, the left rear wheel 13HL, and the right rear wheel 13HR.

The motion control unit 51 controls the hip pitch joint 52FL and controls the rotation of the left front leg 12FL in the pitch direction. The motion control unit 51 controls the hip pitch joint 52FM and controls the rotation of the middle front leg 12FM in the pitch direction. The motion control unit 51 controls the hip pitch joint 52FR and controls the rotation of the right front leg 12FR in the pitch direction. The motion control unit 51 controls the hip pitch joint 52HL and controls the rotation of the left rear leg 12HL in the pitch direction. The motion control unit 51 controls the hip pitch joint 52HM and controls the rotation of the middle rear leg 12HM in the pitch direction. The motion control unit 51 controls the hip pitch joint 52HR and controls the rotation of the right rear leg 12HR in the pitch direction.

The motion control unit 51 controls the vertical linear motion joint 53FL and controls the extension and contraction of the left front leg 12FL. The motion control unit 51 controls the vertical linear motion joint 53FM and controls the extension and contraction of the middle front leg 12FM. The motion control unit 51 controls the vertical linear motion joint 53FR and controls the extension and contraction of the right front leg 12FR. The motion control unit 51 controls the vertical linear motion joint 53HL and controls the extension and contraction of the left rear leg 12HL. The motion control unit 51 controls the vertical linear motion joint 53HM and controls the extension and contraction of the middle rear leg 12HM. The motion control unit 51 controls the vertical linear motion joint 53HR and controls the extension and contraction of the right rear leg 12HR.

For example, the motion control unit 51 individually controls a joint mechanism (the hip pitch joint 52 and the vertical linear motion joint 53) of each leg 12 to move the moving body 1 by moving each leg 12 away from the ground in a traveling direction. For example, the motion control unit 51 moves the moving body 1 by rotating the left and right front wheels 13F and the left and right rear wheels 13H in a traveling direction.

Note that, hereinafter, the left front wheel 13FL, the right front wheel 13FR, the left front wheel 13FL, the right front wheel 13FR, the hip pitch joint 52FL to the hip pitch joint 52HR, and the vertical linear motion joint 53FL to the vertical linear motion joint 53HR used for an autonomous motion of the moving body 1 are collectively referred to as a drive unit 61.

<Method for Controlling Moving Body 1>

Next, an example of a method for controlling the moving body 1 will be described.

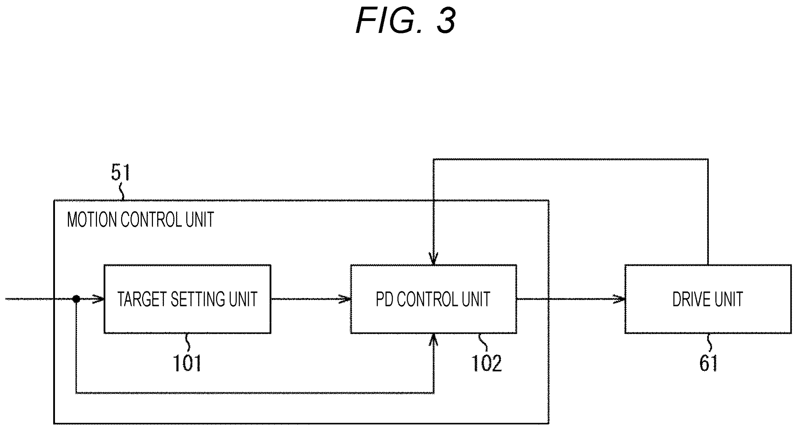

Fig. 3 illustrates a configuration example of functions of the motion control unit 51.

The motion control unit 51 includes a target setting unit 101 and a proportional differential (PD) control unit 102.

State information of the moving body 1 is input to the target setting unit 101 and the PD control unit 102. The state information includes, for example, external information indicating a surrounding state of the moving body 1 and internal information indicating an internal state of the moving body 1.

The target setting unit 101 sets a target value of a control target of the moving body 1 on the basis of the state information and the like, and supplies a signal (hereinafter, referred to as a target signal) indicating the set target value to the PD control unit 102. The control target includes, for example, a speed, an acceleration, a movement amount, a posture, a force, and the like of each part (for example, each joint and the like) of the moving body 1.

The PD control unit 102 receives a signal (hereinafter, referred to as an actual measurement signal) indicating an actual measurement value of the control target of the moving body 1 from the drive unit 61. The PD control unit 102 executes PD control on the basis of the state information, the target signal, and the actual measurement signal, generates a control signal for controlling the drive unit 61 so as to bring the control target close to the target value, and supplies the control signal to the drive unit 61. The control signal includes, for example, a signal for controlling a control parameter (for example, torque, current, and the like of the actuator) for driving each joint of the moving body 1.

Furthermore, the PD control unit 102 controls switching between a normal motion and a safe motion of the moving body 1 on the basis of the surrounding state of the moving body 1 and the internal state of the moving body 1. The normal motion is, for example, a motion in which the moving body 1 executes various tasks according to a plan. The safe motion is, for example, a motion (for example, emergency stop or the like) for the moving body 1 to avoid danger and ensure safety.

<Switching Method between Normal Motion and Safe Motion>

Here, a specific example of a method for switching between the normal motion and the safe motion will be described.

For example, in a case where the technique of the related art is used, the PD control unit 102 sets a value of a control parameter u used for the control of the drive unit 61 to a normal value $u^{task}$ or a safe value $u^{safe}$ according to the following Expression (1) and Expression (2). The normal value $u^{task}$ is a value of the control parameter u corresponding to the normal motion of the moving body 1, that is, a value of the control parameter u for causing the moving body 1 to execute the normal motion. The safe value $u^{safe}$ is a value of the control parameter u corresponding to the safe motion of the moving body 1, that is, a value of the control parameter u for causing the moving body 1 to execute the safe motion.

$$u = u^{task} \ (hsafe \geq 0) \quad \cdots \ (1)$$

$$u = u^{safe} \ (hsafe < 0) \quad \cdots \ (2)$$

hsafe is a determination function for determining the safety of the moving body 1. The determination function hsafe is used to determine switching between the normal motion and the safe motion.

A normal margin is provided in the determination function hsafe. For example, in the determination function hsafe, a determination value used to determine switching between the normal motion and the safe motion is set to a value in which a margin (safety margin) is provided on the safe side with respect to a boundary value between a safe state and a dangerous state of the moving body 1. For example, in a case where the determination function hsafe is a function that

EP 4 691 698 A1

performs collision determination with an obstacle, the determination value used to determine switching between the normal motion and the safe motion is set to a distance at which a margin is provided on the safe side other than a distance (boundary value) with the obstacle, that is, a distance shorter than the distance with the obstacle.

For example, in a case where a value of the determination function hsafe is 0 or more, that is, in a case where it is determined that the moving body 1 is safe, the control parameter u is set to the normal value $u^{task}$. On the other hand, in a case where the value of the determination function hsafe is less than 0, that is, in a case where it is determined that the moving body 1 is not safe, the control parameter u is set to the safe value $u^{safe}$.

However, in a case where the value of the control parameter u is switched by Expression (1) and Expression (2), there is a possibility that the following problem occurs.

That is, since the value of the control parameter u is switched discontinuously, the motion of the moving body 1 is switched discontinuously. Furthermore, in a state where the value of the determination function hsafe is close to 0, there is a possibility that chattering in which the control parameter u vibrates between the normal value $u^{task}$ and the safe value $u^{safe}$ occurs. Therefore, there is a possibility that the moving body 1 frequently repeats switching between the normal motion and the safe motion and the motion becomes unstable.

In contrast, in the present technology, for example, a smoothly increasing or decreasing function in which the determination function hsafe is used or a stepwise and continuously increasing or decreasing function in a stepwise manner (hereinafter, referred to as a continuous step function) is used as a function (hereinafter, referred to as a switching control function) used to switch the control parameter u.

The smoothly increasing or decreasing function is, for example, a monotonically increasing function in a broad sense that can be differentiated between the normal value $u^{task}$ and the safe value $u^{safe}$ and monotonically increases or a monotonically decreasing function in a broad sense that monotonically decreases. For example, a sigmoid function is included.

The continuous step function is, for example, a monotonically increasing function in a broad sense that monotonically increases in two or more steps or a monotonically decreasing function in a broad sense that monotonically decreases between the normal value $u^{task}$ and the safe value $u^{safe}$.

For example, the control parameter u is controlled by a switching control function expressed by the following Expression (3) including the sigmoid function in which the determination function hsafe is used.

$$u = u^{safe} + \{1/(1 + e^{-\alpha \cdot hsafe})\} \times (u^{task} - u^{safe}) \quad \cdots (3)$$

$\alpha$ is a parameter for adjusting smoothness.

Therefore, the control parameter u smoothly changes between the normal value $u^{task}$ and the safe value $u^{safe}$. That is, the control parameter u is switched from one of the normal value $u^{task}$ and the safe value $u^{safe}$ to the other while a ratio between the normal value $u^{task}$ and the safe value $u^{safe}$ changes stepwise. Note that, as the parameter $\alpha$ decreases, the control parameter u changes more smoothly (more gently).

As a result, the motion of the moving body 1 is stabilized. That is, in a case where the motion is switched from one motion of the normal motion and the safe motion to the other motion, the motion of the moving body 1 transitions stepwise from the one motion to the other motion while superimposing the other motion on the one motion. Furthermore, the motion of the moving body 1 transitions from one motion to the other motion while a ratio at which one motion and the other motion are superimposed changes stepwise.

Therefore, the moving body 1 can smoothly transition from the normal motion to the safe motion. Furthermore, the moving body 1 can smoothly return from the safe motion to the normal motion. Moreover, chattering is prevented from occurring between the normal motion and the safe motion.

Next, an example of a case where the motion control unit 51 controls a control signal $\tau$ for controlling a joint angle $\theta$ of each joint of the moving body 1 will be described. The control signal $\tau$ is, for example, a signal for controlling the control parameter (for example, torque, current, or the like of the actuator) for driving each joint of the moving body 1.

For example, the control signal $\tau$ is controlled according to the following Expression (4).

$$\tau = kp(\theta) \times (\theta^{ref} - \theta) - kv \times \omega \quad \cdots (4)$$

$\theta$ indicates an actual measurement value (hereinafter, referred to as an actual measurement joint angle) of the joint angle. $\theta^{ref}$ indicates a target value (hereinafter, referred to as a target joint angle) of the joint angle. $\omega$ indicates an actual measurement value (hereinafter, referred to as an actual measurement joint angular velocity) of an angular velocity (hereinafter, referred to as a joint angular velocity) of the joint. $kp(\theta)$ indicates a position gain in the PD control. $kv$ indicates a speed gain in the PD control.

Note that, although not appearing in Expression (4), a target value (hereinafter, referred to as a target joint angular velocity) $\omega^{ref}$ of the joint angular velocity is set to 0.

The position gain kp(θ) is controlled by a switching control function expressed by the following Expression (5).

$$kp(\theta) = kp^{task}/(1 + e^{-\alpha \cdot h(\theta)}) \quad \cdots \quad (5)$$

$kp^{task}$ indicates a normal value of the position gain in the PD control, that is, a position gain (hereinafter, referred to as a normal position gain) during the normal motion. h(θ) indicates a determination function with respect to the measured joint angle θ. That is, h(θ) is a function used to determine the safety of the moving body 1 on the basis of the actual measurement joint angle θ and determine switching between the normal motion and the safe motion. α indicates a parameter for adjusting smoothness.

Note that, Expression (5) corresponds to Expression (3) described above. That is, the position gain kp(θ) corresponds to the control parameter u in Expression (3). The normal position gain $kp^{task}$ corresponds to the normal value $u^{task}$ in Expression (3). The determination function h(θ) corresponds to hsafe in Expression (3). The parameter α corresponds to the parameter α in Expression (3).

Note that, although not appearing in Expression (5), a safe value (hereinafter, referred to as a safe position gain) $kp^{safe}$ of the position gain corresponds to the safe value $u^{safe}$ in Expression (3) and is set to 0.

Accordingly, the position gain $k_p(\theta)$ changes smoothly stepwise between the normal position gain $kp^{task}$ and the safe position gain $kp^{safe}$ (= 0). Therefore, the control signal τ changes smoothly stepwise between a value of a normal state and a value of a safe state.

As a result, the motion of the moving body 1 is stabilized. That is, the moving body 1 can smoothly transition from the normal motion to the safe motion. Furthermore, the moving body 1 can smoothly return from the safe motion to the normal motion.

Next, an example of a case where the motion control unit 51 controls the position gain kp(θ) with respect to a posture angle θ of the moving body 1 will be described.

For example, the position gain kp(θ) is controlled by switching control functions expressed by the following Expression (6) to Expression (8).

$$kp(\theta) = f(\theta) \times kp^{task} \quad \cdots \quad (6)$$

$$f(\theta) = g(\theta - \theta_{MIN}, \alpha) + g(\theta_{MAX} - \theta, \alpha) - 1 \quad \cdots \quad (7)$$

$$g(x, \alpha) = 1/(1 + e^{-\alpha \cdot x}) \quad \cdots \quad (8)$$

$kp^{task}$ indicates a normal value of the position gain in the PD control, that is, the position gain (normal position gain) during the normal motion. $\theta_{MIN}$ indicates a minimum value (hereinafter, referred to as a minimum allowable posture angle) of an allowable range (allowable posture angle) of a deviation amount of the posture angle θ from a horizontal direction. $\theta_{MAX}$ indicates a maximum value (hereinafter, referred to as a maximum allowable posture angle) of an allowable range (allowable posture angle) of the deviation amount of the posture angle θ from the horizontal direction. α indicates a parameter for adjusting smoothness.

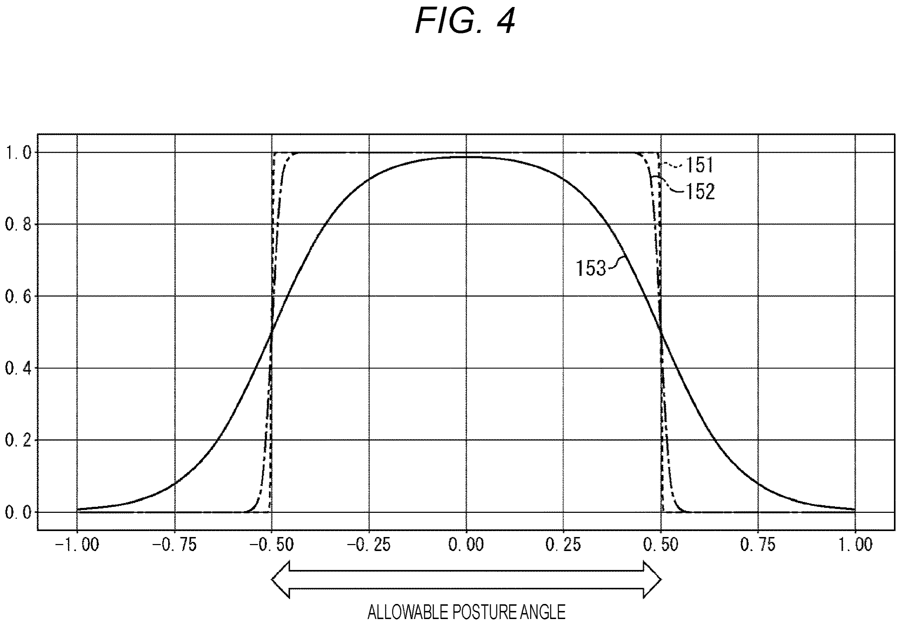

Fig. 4 illustrates an example of characteristics of the position gain kp(θ)in a case where the minimum allowable posture angle $\theta_{MIN}$ = -0.5, the maximum allowable posture angle $\theta_{MAX}$ = 0.5, and $kp^{task}$ = 1. In Fig. 4, a horizontal axis indicates the posture angle θ, and a vertical axis indicates the position gain kp(θ).

A curve 151 indicates the characteristics of the position gain kp(θ)in the case of α = 1000. A curve 152 indicates the characteristics of the position gain kp(θ) in the case of α = 100. A curve 153 indicates the characteristics of the position gain kp(θ) in the case of α = 10.

In this manner, the position gain kp(θ) smoothly changes in accordance with the deviation amount of the posture angle θ of the moving body 1 from the horizontal direction (θ = 0). Therefore, the switching between the normal motion executed in a case where the posture angle θ of the moving body 1 is within a range of the allowable posture angle and the safe motion executed in a case where the posture angle θ of the moving body 1 is outside the range of the allowable posture angle becomes smooth. Furthermore, it is easy to return the moving body 1 from the safe motion to the normal motion.

<Example of Determination Function>

Next, an example of the determination function will be described.

First, an example of the determination function h(θ) in Expression (5) described above will be described.

For example, the determination function h(θ) is defined as the following Expression (9).

$$h(\theta) = \theta_{MAX} - \theta - \varepsilon \quad \cdots \quad (9)$$

$\theta_{MAX}$ indicates a maximum value (hereinafter, referred to as a maximum joint angle) of the joint angle $\theta$. $\varepsilon$ indicates a safe margin amount with respect to the maximum joint angle $\theta_{MAX}$.

Note that, for example, in Expression (9), the target joint angle $\theta^{ref}$ can be used instead of the actual measurement joint angle $\theta$.

Furthermore, for example, in Expression (9), a joint angular velocity, temperature information, and the like may be added to an input value of the determination function $h(\theta)$ in consideration of a maximum joint angle and a maximum temperature of the moving body 1.

Next, an example of a case where the determination function is generated on the basis of a plurality of determination conditions for determining the safety of the moving body 1 will be described.

For example, a determination function including a smooth scalar function may be generated by using a smooth maximum function (for example, LogSumExp) or a smooth minimum function as the plurality of determination conditions.

For example, as expressed in the following Expression (10), n determination conditions $h_i(x_i) \geq 0$ ($i = 1, ..., n$) for determining the safety of the moving body 1 can be integrated into one and can be expressed by a determination function $h(x_1, x_2, ..., x_n)$ including a smooth scalar function.

[Math. 1]

$$h(x_1, x_2, \ldots, x_n) = \frac{1}{\alpha} \log\left(\sum e^{\alpha \cdot h_i(x_i)}\right) \quad \cdots \quad (10)$$

$x_i$ is a variable expressing the state of the moving body 1. $\alpha$ is a parameter for adjusting smoothness. $h_i(x_i)$ is a determination function based on the variable $x_i$. For example, $h_i(x_i)$ is a function that determines a posture angle allowable value, a movable range of each joint, a support polygon constraint, and the like. Note that, the same variable $x_i$ may be used between different $h_i(x_i)$.

More specifically, for example, it is possible to express $\theta_{MIN} \leq \theta \leq \theta_{MAX}$ by the determination function $h(\theta)$ in the following Expression (11) by using the LogSumExp function.

[Math. 2]

$$h(\theta) = \frac{1}{\beta} \log\left(e^{\beta(\theta_{MAX} - \varepsilon - \theta)} + e^{\beta(\theta - \varepsilon - \theta_{MIN})}\right) \quad \cdots \quad (11)$$

$\beta$ is a parameter for adjusting smoothness. $\varepsilon$ indicates a safe margin amount.

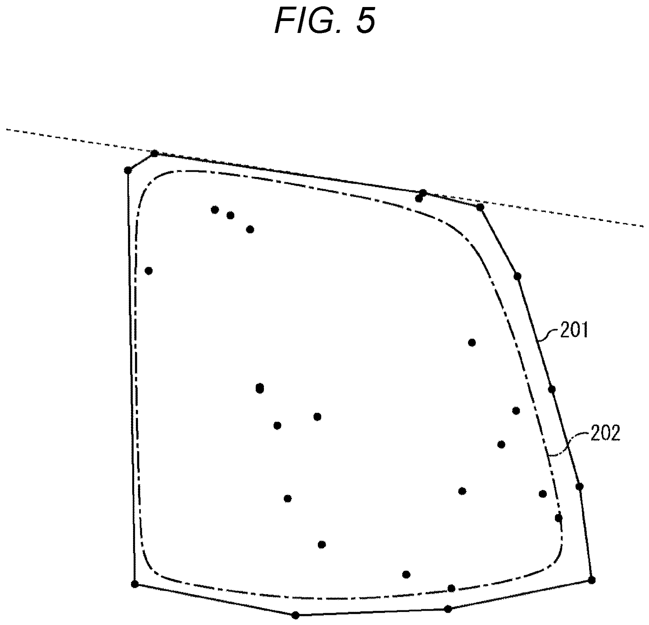

Furthermore, for example, a determination function $h(x)$ used for inside-outside determination of a convex polygon connecting a plurality of points as in a safe region 201 in Fig. 5 can be expressed by the following Expression (12).

[Math. 3]

$$h(x) = \frac{1}{\alpha} \log\left(\sum e^{\alpha(b_i - a_i x)}\right) < 0 \quad \cdots \quad (12)$$

Note that, each determination condition is expressed by the following Expression (13).

$$b_i - a_i x < 0 \ (= \text{safe} \ (i=1,2,\ldots)) \quad \cdots \quad (13)$$

$\alpha$ is a parameter for adjusting smoothness. As $\alpha$ decreases, the curve becomes smoother.

The safe region 201 surrounded by a plurality of straight lines is converted into a region 202 surrounded by a smooth curve by the determination function $h(x)$ in Expression (12). That is, discontinuity in a case where a plurality of determination conditions overlaps is alleviated, and continuity of the determination function $h(x)$ is improved.

Therefore, it is possible to apply a non-linear control method (for example, control barrier function (CBF)) on the premise of smoothness (requiring a gradient) or optimization calculation and optimum control (for example, model predictive control (MPC)). Furthermore, a plurality of constraint conditions (for example, a cost function, a control condition, and the like) is integrated into one, and thus, a calculation time is reduced.

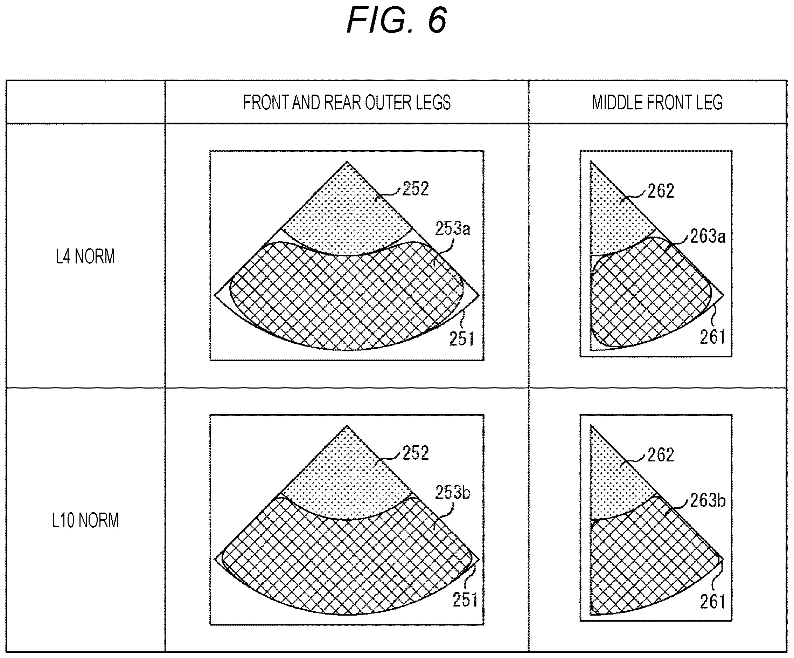

Next, a determination function expressing a movable range of the distal ends of the legs 12 of the moving body 1 will be described with reference to Fig. 6.

Fig. 6 schematically illustrates a movable range 251 and a non-movable range 252 of leg tips of the outer legs (the left front leg 12FL, the right front leg 12FR, the left rear leg 12HL, and the right rear leg 12HR) in front and behind the moving body 1, and a movable range 261 and a non-movable range 262 of a leg tip of the middle front leg 12FM.

Here, a determination function $h(f_1(p_1), f_2(p_2))$ expressing the movable range 251 and the movable range 261 can be expressed by the following Expression (14).

[Math. 4]

$$h(f_1(p_1), f_2(p_2)) = 1 - \sum_i \left( \frac{f_i(p_i) - \frac{f_{iMAX} + f_{iMIN}}{2}}{\frac{f_{iMAX} - f_{iMIN}}{2}} \right)^{2M} \geq 0 \qquad \cdots (14)$$

$p_1$ and $p_2$ indicate a relative position of the leg tip with respect to a root of the leg 12, and $p_1 = p_2 = (x, y)$.

$f_1(p_1)$ is a function expressing a length of the leg 12 and is expressed by the following Expression (15).

$$f_1(p_1) = \sqrt{(x^2 + y^2)} \quad \cdots (15)$$

$f_{1MIN}$ indicates a minimum value of the length of the leg 12, and $f_{1MAX}$ indicates a maximum value of the length of the leg 12. Accordingly, the following Expression (16) is established.

$$f_{1MIN} \leq f_1(p_1) \leq f_{1MAX} \quad \cdots (16)$$

$f_2(p_2)$ is a function expressing a rotation angle of the leg 12 and is expressed by the following Expression (17).

$$f_2(p_2) = atan2(y, x) \quad \cdots (17)$$

$f_{2MIN}$ indicates a minimum value of the rotation angle of the leg 12, and $f_{2MAX}$ indicates a maximum value of the rotation angle of the leg 12. Accordingly, the following Expression (18) is established.

$$f_{2MIN} \leq f_2(p_2) \leq f_{2MAX} \quad \cdots (18)$$

2M is a parameter for adjusting smoothness.

A region 253a in Fig. 6 is a region in which the movable range 251 of the outer legs in front and behind the moving body 1 is expressed by using the determination function $h(f_1(p_1), f_2(p_2))$ of the L4 norm (parameter 2M = 4). A region 253b in Fig. 6 is a region in which the movable range 251 of the outer legs in the front of and behind the moving body 1 is expressed by using the determination function $h(f_1(p_1), f_2(p_2))$ of the L10 norm (parameter 2M = 10).

The region 253a and the region 253b are regions surrounded by smooth curves. Furthermore, the region 253b is closer to the actual movable range 251 than the region 253a.

A region 263a in Fig. 6 is a region in which the movable range 261 of the middle front leg 12FM of the moving body 1 is expressed by using the determination function $h(f_1(p_1), f_2(p_2))$ of the L4 norm (parameter 2M = 4). A region 263b in Fig. 6 is a region expressing the movable range 261 of the middle front leg 12FM of the moving body 1 using the determination function $h(f_1(p_1), f_2(p_2))$ of the L10 norm (parameter 2M = 10).

The region 263a and the region 263b are regions surrounded by smooth curves. Furthermore, the region 263b is closer to the actual movable range 261 than the region 263a.

In this manner, the movable range of each leg 23 can be smoothly expressed by the determination function $h(f_1(p_1), f_2(p_2))$ in Expression (14). Accordingly, it is possible to apply a non-linear control method on the premise of smoothness (requiring a gradient) or optimization calculation and optimum control. Furthermore, a plurality of constraint conditions is integrated into one, and thus, a calculation time is reduced.

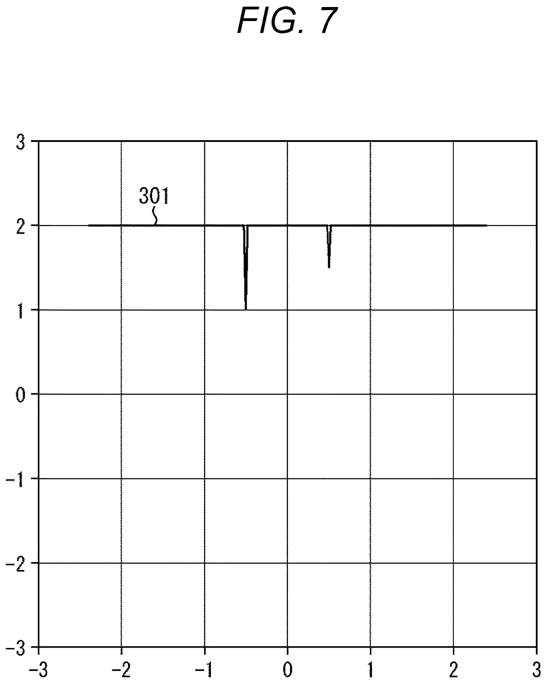

Next, a method for expressing a distance to a spike-shaped obstacle by a smooth determination function will be described with reference to Fig. 7.

A graph in Fig. 7 indicates a boundary line 301 expressing the spike-shaped obstacle. In Fig. 7, a horizontal axis indicates an x-axis direction, and a vertical axis indicates a y-axis direction.

For example, it is assumed that the movable range of the moving body 1 is expressed by the following Expression (19) to Expression (21).

$$y \leq 1 \ (if \ x = -0.5) \ \cdots \ (19)$$

$$y \leq 1.5 \ (if \ x = 0.5) \ \cdots \ (20)$$

$$y \leq 2 \ (else) \ \cdots \ (21)$$

In this case, for example, the boundary line 301 can be expressed by a smooth function by performing replacement of applying conditions expressed by Expression (22) and Expression (23) to functions expressed by Expression (24) and Expression (25) twice for conditions expressed by Expression (19) to Expression (21).

$$y = x_1 \ (if \ x = x_0) \ \cdots \ (22)$$

$$y = x_2 \ (else) \ \cdots \ (23)$$

[Math. 5]

$$y = (1 - r(x)) \times x_1 + r(x) \times x_2 \qquad \cdots (24)$$

$$r(x) = e^{-\alpha(x-x_0)^2} \qquad \cdots (25)$$

Therefore, a spike-shaped obstacle can be expressed by a smooth function, and for example, CBF can be applied.

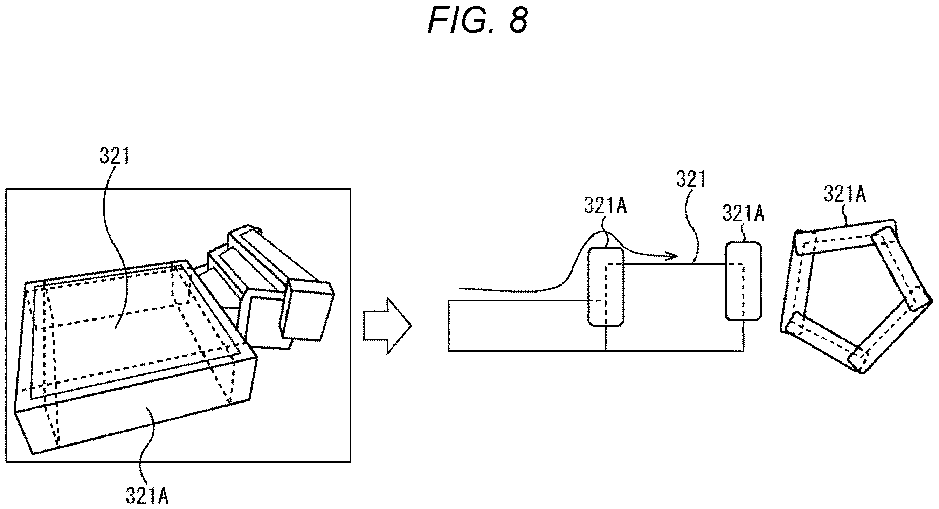

Next, an example of a determination function for a rectangular parallelepiped table 321 will be described with reference to Fig. 8.

For example, in a case where the moving body 1 moves so as to avoid an edge portion 321A of the table 321, a determination function h(p) is expressed by the following Expression (25) and Expression (26).

[Math. 6]

$$h(p) = \left(\frac{x^*}{a}\right)^{2N} + \left(\frac{y^*}{b}\right)^{2N} + \left(\frac{z^*}{c}\right)^{2N} - 1 \leq 0 \qquad \cdots (26)$$

$$p^* = (x^*, y^*, z^*) = R_{edge}^T \times (p - p_{edge}) \qquad \cdots (27)$$

h(p) is a determination function indicating a safe region for a three-dimensional position $p = (x, y, z)$ of the leg tip of the leg 12 of the moving body 1. Note that, an x-axis indicates a vertical direction (horizontal direction in the drawing) of the table 321, a y-axis indicates a horizontal direction (depth direction in the drawing) of the table 321, and a z-axis indicates a height direction (vertical direction in the drawing) of the table 321.

a indicates a length of the table 321 in the x-axis direction, b indicates a length of the table 321 in the y-axis direction, and c indicates a height of the table 321 in a z-axis direction. $R_{edge}$ indicates the rotation matrix of the edge portion 321A of the table 321, and $p_{edge}$ indicates a center position of the edge portion 321A of the table 321. 2N is a parameter for adjusting smoothness.

In this manner, the determination function h(p) for the edge portion 321A of the table 321 can be expressed by one smooth function. Accordingly, it is possible to apply a non-linear control method on the premise of smoothness (requiring a gradient) or optimization calculation and optimum control. Furthermore, a plurality of constraint conditions is integrated into one, and thus, a calculation time is reduced.

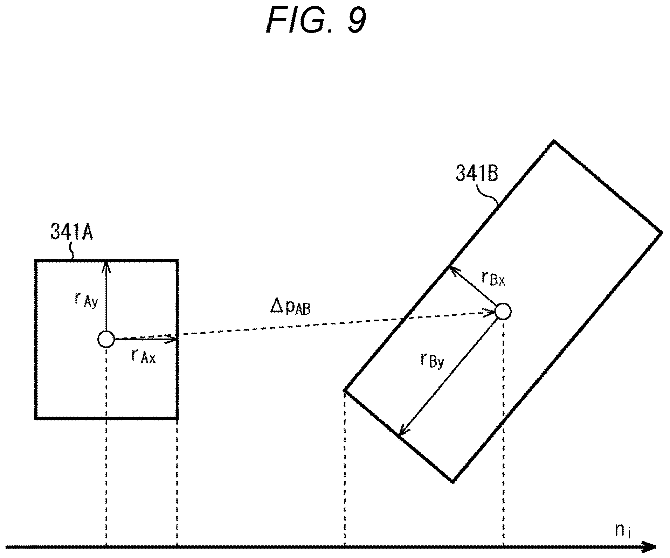

Next, a method for expressing collision determination between an oriented bounding box (OBB) 341A and an OBB 341B surrounding an object having a shape by a smooth determination function will be described with reference to Fig. 9.

Note that, hereinafter, in a case where it is not necessary to individually distinguish the OBB 341A and the OBB 341B, these OBBs are simply referred to as OBBs 341.

For the collision determination between two OBBs 341, for example, separating axis theorem (SAT) is used. The SAT is a method for confirming whether or not there is no overlap of the OBBs 341 along separation axis candidates, and in a case where there is no overlap of the OBBs 341 in all the separation axes, it is determined that the two OBBs 341 do not collide.

In a case where the OBB 341 is two-dimensional, the number of separation axis candidates is 4 of $2 \times 2$ in a direction of each side of the OBB 341. In a case where the OBB 341 is three-dimensional, the number of separation axis candidates is 15 obtained by adding $3 \times 2$ separation axis candidates in a normal direction of each surface of the OBB 341 and 9 separation axis candidates including an outer product of a normal line between the OBBs 341.

A collision determination function $h_{AB}$ by SAT using such separation axis candidates is expressed by the following Expression (28).

[Math. 7]

$$h_{AB} = \max_{i} \left( |n_i \cdot \Delta p_{AB}| - \sum_{\substack{j=A,B \\ k=x,y,z}} |n_i \cdot r_{jk}| \right) \quad \cdots \ (28)$$

As illustrated in Fig. 9, $n_i$ indicates a separation axis candidate, $\Delta p_{ab}$ indicates a vector connecting centers of the OBB 341A and the OBB 341B, and $r_{ik}$ indicates a vector expressing a dimension (vertical, horizontal, or height in a case where the OBB 341 is three-dimensional) of each side of each OBB 341.

Here, since a maximum value function and an absolute value function used for the collision determination function $h_{AB}$ are not smooth, the collision determination function $h_{AB}$ is not smooth. In contrast, the maximum value function and the absolute value function are smoothed, and thus, non-smooth processing of the collision determination function $h_{AB}$ is approximately replaced with smooth processing.

For example, the maximum value function is smoothed by being approximated by a smooth maximum function represented by LogSumExp.

For example, the absolute value function is smoothed by being approximated by a function using a square root in the following Expression (29) or a function using tanh in the following Expression (30).

$$f(x) = \sqrt{(x^2 + \varepsilon^2)} \quad \cdots \ (29)$$

$$f(x) = x \times \tanh(x) \quad \cdots \ (30)$$

Furthermore, in a case where the collision determination between the three-dimensional OBBs 341 is performed, the separation axis candidate constituted by the outer product of the normal line of the surface of the OBB 341 becomes a zero vector, and erroneous determination may occur.

In contrast, for example, in a case where the norm of the separation axis candidate becomes 0 by using a conditional expression such as the following Expression (31), the separation axis candidate is corrected to an axis in the normal direction.

[Math. 8]

$$f_{cond}(x, x_1, x_2) = \begin{cases} x_1 & \text{if } x = 0 \\ x_2 & \text{if } x \neq 0 \end{cases} \quad \cdots \ (31)$$

However, therefore, non-smooth exception processing occurs in the collision determination between the OBBs 341.

In contrast, the conditional Expression (32) is approached by a function such as the following Expression (33), and thus, the non-smooth exception processing in the Expression (31) is approximately replaced with smooth processing.

$$f_{scond}(x, x_1, x_2) = x_1 \times f_{gauss}(x) + x_2(1 - f_{gauss}(x))$$
$$\cdots \ (32)$$

$$f_{gauss}(x) = \exp(-ax^2) \quad \cdots \ (33)$$

a indicates a coefficient.

As described above, for example, a (safe) motion that can smoothly avoid collision with an environment or another object can be generated with respect to a system expressed by the following Expression (34) by applying the smoothed collision determination function $h_{AB}$ to the CBF and solving a quadratic programming problem.

$$x = f(x) + g(x) \times u \quad \cdots \quad (34)$$

<<2. Modifications>>

Modifications of the above-described embodiment of the present technology will be described hereinafter.

<Method for Adjusting Motion Transition Time>

For example, a transition time between the motions of the moving body 1 may be adjusted on the basis of the determination function.

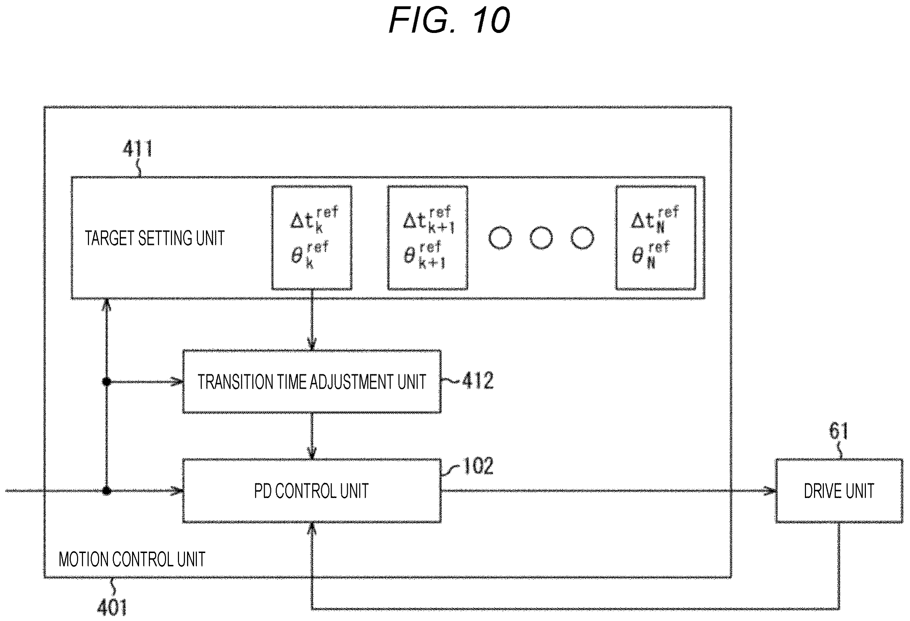

Fig. 10 illustrates a configuration example of a motion control unit 401 which is a modification of the motion control unit 51 of the moving body 1 in Fig. 2. Note that, in the drawing, portions corresponding to those of the motion control unit 51 in Fig. 2 are denoted by the same reference signs, and the description thereof will be omitted as appropriate.

The motion control unit 401 is identical to the motion control unit in including the PD control unit 102, and is different from the motion control unit 51 in that a target setting unit 411 is provided instead of the target setting unit 101 and a transition time adjustment unit 412 is added.

The state information of the moving body 1 is input to the target setting unit 411, the transition time adjustment unit 412, and the PD control unit 102. The state information includes, for example, external information indicating a surrounding state of the moving body 1 and internal information indicating an internal state of the moving body 1.

The target setting unit 411 sets a target value of a control target of the moving body 1 on the basis of the state information and the like. In this example, it is assumed that a target value (target joint angle) $\theta_k^{ref}$ (k = 1, 2, ..., N) of the joint angle of each joint of the moving body 1 is set.

Furthermore, the target setting unit 411 sets a target value (hereinafter, referred to as a target motion transition time) $\Delta t_k^{228f}$ of a motion transition time $\Delta t_k$ until the motion based on the target joint angle $\theta_k^{ref}$ is executed on the basis of the state information and the like.

The target setting unit 411 supplies a target signal indicating the target joint angle $\Delta \theta_k^{ref}$ and the target motion transition time $\Delta t_k^{ref}$ to the transition time adjustment unit 402.

The transition time adjustment unit 402 sets the motion transition time $\Delta t_k$ of the moving body 1 on the basis of the state information and the target motion transition time $\Delta t_k^{ref}$. For example, the transition time adjustment unit 402 sets the motion transition time $\Delta t_k$ by using a transition time control function in the following Expression (35).

$$\Delta t_k = (1 + e^{-(\alpha \cdot h(x) + \beta)}) \times \Delta t_k^{ref} \quad \cdots \quad (35)$$

$\alpha$ indicates a parameter for adjusting smoothness. The parameter $\alpha$ is larger than 0, and as the parameter decreases, the motion transition time $\Delta t_k$ becomes smoother (gentler).

h(x) indicates a determination function for determining the safety of the moving body 1. x indicates a state variable of the moving body 1.

$\beta$ indicates a parameter for adjusting a behavior of the moving body 1 in the case of the determination function h(x) = 0. The parameter $\beta$ is 0 or more, and as the parameter increases, the moving body approaches the normal motion in the case of the determination function h(x) = 0.

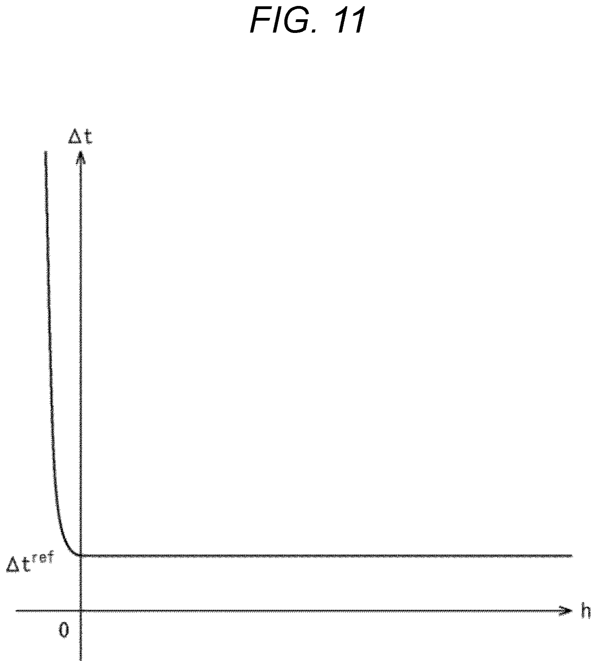

Fig. 11 illustrates characteristics of the motion transition time $\Delta t_k$. In Fig. 11, a horizontal axis indicates a value of the determination function h(x), and a vertical axis indicates the motion transition time $\Delta t$.

In a case where the value of the determination function h(x) is positive, that is, in a case where the state of the moving body 1 is normal, the motion transition time $\Delta t$ approaches the target motion transition time $\Delta t_k^{ref}$ and converges to the target motion transition time $\Delta t_k^{ref}$ as the value of the determination function h(x) increases. Accordingly, the moving body 1 executes the motion based on the target joint angle $\theta_k^{ref}$ according to the target motion transition time $\Delta t_k^{ref}$.

On the other hand, in a case where the value of the determination function h(x) is negative, that is, in a case where the state of the moving body 1 is not normal, the motion transition time $\Delta t_k$ approaches $\infty$ as the value of the determination function h(x) decreases. That is, in order to ensure safety, a transition time until the moving body 1 executes the motion based on the target joint angle $\theta_k^{ref}$ is lengthened or the motion is stopped.

Therefore, the transition time between the motions can be appropriately adjusted on the basis of the determination result of the safety of the moving body 1, and the motions can be continuously executed while ensuring the safety. For example, in a case where the moving body 1 reproduces a given motion, a transition time between key frames and a motion reproduction speed are adjusted in accordance with the safe margin amount.

<Learning Processing of Determination Function and Switching Control Function>

For example, the determination function and the switching control function may be appropriately updated by learning processing.

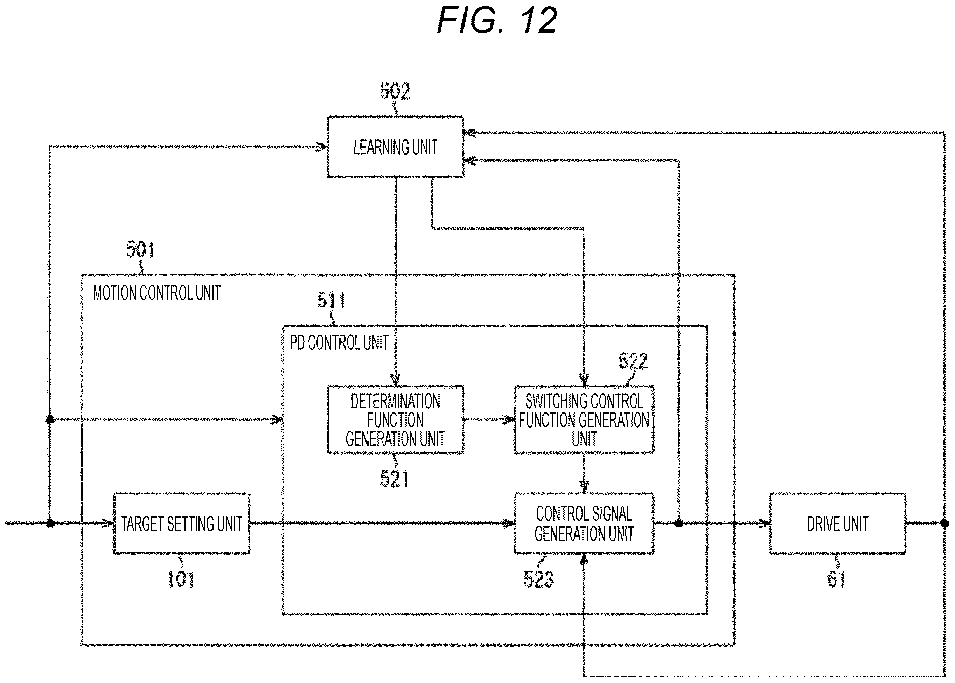

Fig. 12 illustrates a configuration example and the like of a motion control unit 501 which is a modification of the motion control unit 51 of the moving body 1 in Fig. 2. Note that, in the drawing, portions corresponding to those of the motion control unit 51 in Fig. 2 are denoted by the same reference signs, and the description thereof will be omitted as appropriate.

The motion control unit 501 is identical to the motion control unit in that the target setting unit 101 is provided, and is different from the motion control unit 51 in that a PD control unit 511 is provided instead of the PD control unit 102. Furthermore, a learning unit 502 is added.

The PD control unit 511 includes a determination function generation unit 521, a switching control function generation unit 522, and a control signal generation unit 523.

The state information of the moving body 1 is input to the target setting unit 101, the learning unit 502, and the PD control unit 511. The state information includes, for example, external information indicating a surrounding state of the moving body 1 and internal information indicating an internal state of the moving body 1.

The target setting unit 101 sets a target value of a control target of the moving body 1 on the basis of the state information and the like, and supplies a target signal indicating the set target value to the control signal generation unit 523.

The determination function generation unit 521 supplies a determination function for determining the safety of the moving body 1, which is given in advance, to the switching control function generation unit 522. Furthermore, the determination function generation unit 521 updates the parameter of the determination function on the basis of the learning result by the learning unit 502, and supplies the updated determination function to the switching control function generation unit 522. Moreover, the determination function generation unit 521 generates a determination function corresponding to a new determination condition on the basis of the learning result by the learning unit 502, and supplies the generated determination function to the switching control function generation unit 522.

The switching control function generation unit 522 supplies a switching control function for controlling switching of the motion of the moving body 1, which is given in advance, to the switching control function generation unit 522. Furthermore, the switching control function generation unit 522 updates the switching control function on the basis of at least one of the learning result by the learning unit 502 or the determination function supplied from the determination function generation unit 521, and supplies the updated switching function to the control signal generation unit 523. For example, the switching control function generation unit 522 updates the switching control function by integrating the determination functions supplied from the determination function generation unit 521 into one by using the smooth maximum function or the smooth minimum function.

The control signal generation unit 523 receives an actual measurement signal indicating an actual measurement value of the control target of the moving body 1 from the drive unit 61. The control signal generation unit 523 executes PD control on the basis of the state information, the target signal, the actual measurement signal, and the switching control function, generates a control signal for controlling the drive unit 61 so as to bring the control target close to the target value, and supplies the control signal to the drive unit 61 and the learning unit 502.

The learning unit 502 receives an actual measurement signal indicating an actual measurement value of the control target of the moving body 1 from the drive unit 61. The learning unit 502 executes learning processing of the determination function and the switching control function on the basis of the state information, the target signal, the control signal, and the actual measurement signal. For example, the learning unit 502 executes learning processing of parameters of the determination function and the switching control function. For example, the learning unit 502 executes learning of a determination function corresponding to a new determination condition by learning processing.

Note that, a method of the learning processing of the learning unit 502 is not particularly limited. For example, a neural network or the like is used.

Furthermore, the learning unit 502 may execute the learning processing of only one of the determination function and the switching control function.

For example, the learning unit 502 may execute the learning processing during the motion of the moving body 1 and may dynamically update the determination function and the switching control function. Furthermore, for example, the learning unit 502 may execute the learning processing while the moving body 1 is stopped, and may statically update the determination function and the switching control function.

Therefore, the moving body 1 can more appropriately switch between the normal motion and the safe motion, and it is possible to reliably ensure safety and avoid danger. Furthermore, the switching of the motion of the moving body 1 becomes smoother.

Note that, for example, the learning unit 502 may execute the learning processing of the transition time control function.

<Other Modifications>

For example, the moving body 1 may calculate an internal safe margin amount of a robot such as an allowable posture angle, a joint motion range, a temperature, a current amount, and stability by using an internal sensor such as an inertial measurement unit (IMU) or an encoder.

For example, the moving body 1 may calculate an external safe margin amount of the robot such as a distance to an obstacle by using an external sensor such as a stereo camera.

The present technology can be applied to all moving bodies that switch between the normal motion and the safe motion in addition to a legged robot.

The present technology can be applied not only to a moving body that autonomously operates but also to, for example, a moving body that operates by remote control and an information processing apparatus that autonomously performs remote control of the moving body. In this case, for example, at least a part of the functions of the motion control unit is provided in the information processing apparatus that performs remote control.

<<3. Others>>

<Configuration Example of Computer>

The above-described series of processing can be performed by hardware or software. In a case where the series of processing is performed by software, a program that makes up the software is installed in a computer. Here, examples of the computer include a computer incorporated in dedicated hardware, a computer that can execute various functions by installation of various programs, for example, a general-purpose personal computer, and the like.

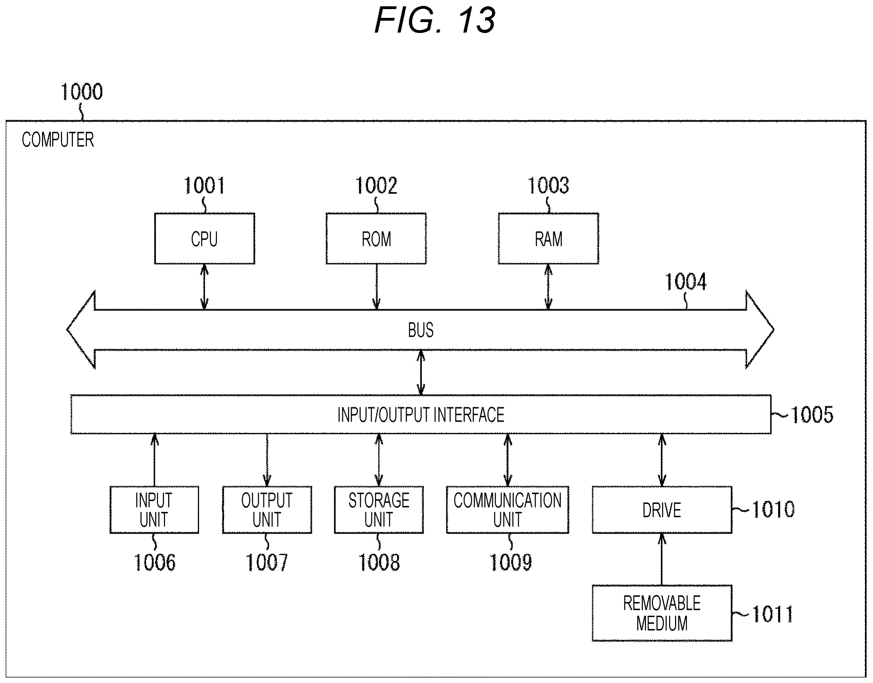

Fig. 13 is a block diagram illustrating a configuration example of hardware of the computer that executes the above-described series of processing by the program.

In a computer 1000, a central processing unit (CPU) 1001, a read only memory (ROM) 1002, and a random access memory (RAM) 1003 are mutually connected by a bus 1004.

An input/output interface 1005 is further connected to the bus 1004. An input unit 1006, an output unit 1007, a storage unit 1008, a communication unit 1009, and a drive 1010 are connected to the input/output interface 1005.

The input unit 1006 includes an input switch, a button, a microphone, an imaging element, or the like. The output unit 1007 includes a display, a speaker, or the like. The storage unit 1008 includes a hard disk, a nonvolatile memory, and the like. The communication unit 1009 includes a network interface or the like. The drive 1010 drives a removable medium 1011 such as a magnetic disk, an optical disc, a magneto-optical disk, or a semiconductor memory.

In the computer 1000 configured as described above, the series of processing described above is performed, for example, by the CPU 1001 loading a program stored in the storage unit 1008 into the RAM 1003 via the input/output interface 1005 and the bus 1004 and executing the program.

The program executed by the computer 1000 (CPU 1001) can be provided by being recorded in the removable medium 1011 as, for example, a package medium or the like. Furthermore, the program can be provided via a wired or wireless transmission medium such as a local area network, the Internet, or digital satellite broadcasting.

In the computer 1000, the program can be installed in the storage unit 1008 via the input/output interface 1005 by having the removable medium 1011 attached to the drive 1010. Furthermore, the program can be received by the communication unit 1009 by means of the wired or wireless transmission medium to be installed in the storage unit 1008. Alternatively, the program can be installed in the ROM 1002 or the storage unit 1008 in advance.

Note that, the program to be executed by the computer may be a program that executes processing in time series along an order described in the present specification, or may be a program that executes processing in parallel or at a necessary timing such as when a call is made.

Furthermore, in the present specification, a system means a set of a plurality of constituent elements (apparatuses, modules (components), or the like), and it does not matter whether or not all the constituent elements are in the same housing. Therefore, a plurality of apparatuses housed in separate housings and connected to each other via a network, and one apparatus including a plurality of modules housed in one housing, are both systems.

Moreover, the embodiment of the present technology is not limited to the above-described embodiment, and various modifications can be made without departing from the gist of the present technology.

For example, the present technology may be embodied in cloud computing in which one function is shared and processed by a plurality of apparatuses in cooperation via a network.

Furthermore, each step described in the flowchart described above may be performed by a single device, or may be performed by a plurality of devices in a shared manner.

Moreover, in a case where a plurality of pieces of processing is included in one step, the plurality of pieces of processing included in the one step can be executed by one device or executed by a plurality of devices in a shared manner.

<Examples of Combinations of Configurations>

The present technology can also be configured as follows.
(1) An information processing apparatus including
a motion control unit that causes a motion of a moving body to transition stepwise from one motion of a normal motion and a safe motion for ensuring safety of the moving body to another motion.
(2) The information processing apparatus according to the above (1),
in which the motion control unit causes the motion of the moving body to transition stepwise from the one motion to the another motion by using a determination function for determining the safety of the moving body.
(3) The information processing apparatus according to the above (2),
in which the determination function is a function obtained by integrating a plurality of determination conditions into one by using a smooth maximum function or a smooth minimum function.
(4) The information processing apparatus according to the above (3),
in which the plurality of determination conditions is expressed by different functions.
(5) The information processing apparatus according to any one of the above (2) to (3),
in which the determination function is a function obtained by approximately replacing one or more pieces of non-smooth processing with smooth processing.
(6) The information processing apparatus according to the above (5),
in which the determination function is a function obtained by smoothing a non-smooth collision determination function between objects having shapes.
(7) The information processing apparatus according to any one of the above (2) to (6),
in which the determination function is used to determine switching between the normal motion and the safe motion.
(8) The information processing apparatus according to the above (1),
in which the motion control unit causes the motion of the moving body to transition from the one motion to the another motion while changing a ratio at which the one motion and the another motion are superimposed.
(9) The information processing apparatus according to the above (8),
in which the motion control unit switches a control parameter used to control the moving body from a first parameter value corresponding to the one motion to a second parameter value corresponding to the another motion while changing a ratio between the first parameter value and the second parameter value.
(10) The information processing apparatus according to the above (9),
in which the motion control unit switches the control parameter from the first parameter value to the second parameter value by using a switching control function that is a smoothly increasing or decreasing function or a stepwise and continuously increasing or decreasing function in a stepwise manner.
(11) The information processing apparatus according to the above (10),
in which the motion control unit switches the control parameter from the first parameter value to the second parameter value by using the switching control function internally using a determination function for determining the safety of the moving body.
(12) The information processing apparatus according to the above (11), further including
a learning unit that learns at least one of the switching control function or the determination function.
(13) The information processing apparatus according to the above (12),
in which the learning unit dynamically updates at least one of the switching control function or the determination function.
(14) The information processing apparatus according to any one of the above (11) to (13),
in which the switching control function is a function using a sigmoid function.
(15) The information processing apparatus according to the above (1),
in which the motion control unit controls a transition time for transitioning the motion of the moving body to a next motion by using a transition time control function internally using a determination function for determining the safety of the moving body.
(16) The information processing apparatus according to the above (15),
in which, in the transition time control function, in a case where it is determined that the moving body is not safe by the determination function, the transition time becomes longer than in a case where it is determined that the moving body is safe by the determination function.
(17) The information processing apparatus according to any one of the above (1) to (16),

in which the normal motion is a motion in which the moving body executes various tasks according to a plan.

(18) A motion control method including

causing a motion of a moving body to transition stepwise from one motion of a normal motion and a safe motion for ensuring safety of the moving body to another motion.

(19) A moving body including

a drive unit used for a normal motion and a safe motion for ensuring safety, and
a motion control unit that causes a motion of the moving body to transition stepwise from one motion of the normal motion and the safe motion to another motion.

Note that, the effects described in the present specification are merely examples and are not limited, and other effects may be provided.

REFERENCE SIGNS LIST

| | |
|---|---|
| 1 | Moving body |
| 11 | Trunk |
| 12FL | Left front leg |
| 12FM | Middle front leg |
| 12FR | Right front leg |
| 12HL | Left rear leg |
| 12HM | Middle rear leg |
| 12HR | Right rear leg |
| 13FL | Left front wheel |
| 13FM | Middle front wheel |
| 13FR | Right front wheel |
| 13HL | Left rear wheel |
| 13HM | Middle rear wheel |
| 13HR | Right rear wheel |
| 51 | Motion control unit |
| 52FL to 52HR | Hip pitch joint |
| 53FL to 53HR | Vertical linear motion joint |
| 61 | Drive unit |
| 101 | Target setting unit |
| 102 | PD control unit |
| 401 | Motion control unit |
| 411 | Target setting unit |
| 412 | Transition time adjustment unit |
| 501 | Motion adjustment unit |
| 502 | Learning unit |
| 511 | PD control unit |
| 521 | Determination function generation unit |
| 522 | Switching control function generation unit |
| 523 | Control signal generation unit |

**Claims**

1. An information processing apparatus comprising:
   a motion control unit that causes a motion of a moving body to transition stepwise from one motion of a normal motion and a safe motion for ensuring safety of the moving body to another motion.

2. The information processing apparatus according to claim 1,
   wherein the motion control unit causes the motion of the moving body to transition stepwise from the one motion to the another motion by using a determination function for determining the safety of the moving body.

3. The information processing apparatus according to claim 2,

wherein the determination function is a function obtained by integrating a plurality of determination conditions into one by using a smooth maximum function or a smooth minimum function.

4. The information processing apparatus according to claim 3,
wherein the plurality of determination conditions is expressed by different functions.

5. The information processing apparatus according to claim 2,
wherein the determination function is a function obtained by approximately replacing one or more pieces of non-smooth processing with smooth processing.

6. The information processing apparatus according to claim 5,
wherein the determination function is a function obtained by smoothing a non-smooth collision determination function between objects having shapes.

7. The information processing apparatus according to claim 2,
wherein the determination function is used to determine switching between the normal motion and the safe motion.

8. The information processing apparatus according to claim 1,
wherein the motion control unit causes the motion of the moving body to transition from the one motion to the another motion while changing a ratio at which the one motion and the another motion are superimposed.

9. The information processing apparatus according to claim 8,
wherein the motion control unit switches a control parameter used to control the moving body from a first parameter value corresponding to the one motion to a second parameter value corresponding to the another motion while changing a ratio between the first parameter value and the second parameter value.

10. The information processing apparatus according to claim 9,
wherein the motion control unit switches the control parameter from the first parameter value to the second parameter value by using a switching control function that is a smoothly increasing or decreasing function or a stepwise and continuously increasing or decreasing function in a stepwise manner.

11. The information processing apparatus according to claim 10,
wherein the motion control unit switches the control parameter from the first parameter value to the second parameter value by using the switching control function internally using a determination function for determining the safety of the moving body.

12. The information processing apparatus according to claim 11, further comprising:
a learning unit that learns at least one of the switching control function or the determination function.

13. The information processing apparatus according to claim 12,
wherein the learning unit dynamically updates at least one of the switching control function or the determination function.

14. The information processing apparatus according to claim 11,
wherein the switching control function is a function using a sigmoid function.

15. The information processing apparatus according to claim 1,
wherein the motion control unit controls a transition time for transitioning the motion of the moving body to a next motion by using a transition time control function internally using a determination function for determining the safety of the moving body.

16. The information processing apparatus according to claim 15,
wherein, in the transition time control function, in a case where it is determined that the moving body is not safe by the determination function, the transition time becomes longer than in a case where it is determined that the moving body is safe by the determination function.

17. The information processing apparatus according to claim 1,
wherein the normal motion is a motion in which the moving body executes various tasks according to a plan.

**18.** A motion control method comprising:
causing a motion of a moving body to transition stepwise from one motion of a normal motion and a safe motion for ensuring safety of the moving body to another motion.

**19.** A moving body comprising:

a drive unit used for a normal motion and a safe motion for ensuring safety; and
a motion control unit that causes a motion of the moving body to transition stepwise from one motion of the normal motion and the safe motion to another motion.

FIG. 1

## FIG. 2

EP 4 691 698 A1

EP 4 691 698 A1

## FIG. 3

# FIG. 4

ALLOWABLE POSTURE ANGLE

EP 4 691 698 A1

## FIG. 5

201

202

# FIG. 6

| | FRONT AND REAR OUTER LEGS | MIDDLE FRONT LEG |
|---|---|---|
| L4 NORM | | |
| L10 NORM | | |

EP 4 691 698 A1

## FIG. 7

# FIG. 8

EP 4 691 698 A1

EP 4 691 698 A1

*FIG. 9*

## FIG. 10

*FIG. 11*

EP 4 691 698 A1

## FIG. 12

# FIG. 13

EP 4 691 698 A1

**EP 4 691 698 A1**

## INTERNATIONAL SEARCH REPORT

| | |
|---|---|
| International application No. | |
| | **PCT/JP2023/031774** |

| A. | CLASSIFICATION OF SUBJECT MATTER |
|---|---|

*B25J 5/00*(2006.01)i; *B25J 13/00*(2006.01)i; *G05D 1/02*(2020.01)i
FI:   B25J5/00 E; G05D1/02 H; B25J13/00 Z

According to International Patent Classification (IPC) or to both national classification and IPC

| B. | FIELDS SEARCHED |
|---|---|

Minimum documentation searched (classification system followed by classification symbols)

B25J5/00; B25J13/00; G05D1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-500668 A (ROBERT BOSCH GMBH) 07 January 2021 (2021-01-07) | 1, 8-10, 17-19 |
| | paragraph [0026] | |
| A | | 2-7, 11-16 |
| A | WO 2012/104899 A1 (TOYOTA JIDOSHA KABUSHIKI KAISHA) 09 August 2012 (2012-08-09) | 1-19 |
| | paragraph [0148] | |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/031774**

| Patent document cited in search report | | | Publication date (day/month/year) | Patent family member(s) | | | Publication date (day/month/year) |
|---|---|---|---|---|---|---|---|
| JP | 2021-500668 | A | 07 January 2021 | WO | 2019/081135 | A1 | |
| | | | | DE | 102017218917 | A1 | |
| | | | | CN | 111226178 | A | |
| | | | | KR | 10-2020-0079489 | A | |
| WO | 2012/104899 | A1 | 09 August 2012 | US | 2012/0291036 | A1 | |
| | | | | paragraph [0180] | | | |
| | | | | EP | 2672344 | A1 | |
| | | | | CN | 103403628 | A | |

Form PCT/ISA/210 (patent family annex) (January 2015)

# EP 4 691 698 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- JP 2021181156 A